# EUROPEAN PATENT SPECIFICATION

(11) **EP 3 176 691 B1**
(45) Date of publication and mention of the grant of the patent: **31.07.2019**
(21) Application number: 14881587.1
(22) Date of filing: 15.09.2014
(51) Int. Cl.: G06F 3/0486, G06F 3/0481

(54) **APPLICATION PROCESSING METHOD AND TERMINAL**
ANWENDUNGSVERARBEITUNGSVERFAHREN UND -ENDGERÄT
PROCÉDÉ DE TRAITEMENT D'APPLICATION ET TERMINAL

(30) Priority: 29.07.2014 CN 201410367500
(43) Date of publication of application: 07.06.2017
(73) Proprietor: ZTE Corporation, Shenzhen, Guangdong 518057 (CN)
(72) Inventor: ZHAO, Xiaohong, Shenzhen Guangdong 518057 (CN)
(74) Representative: Broderick, Terence
(86) International application number: PCT/CN2014/086567
(87) International publication number: WO 2015/117316

(56) References cited:
- EP-A2- 2 437 148
- CN-A- 102 479 027
- CN-A- 102 685 194
- CN-A- 103 076 976
- US-A1- 2005 289 478
- Louis Tech: "Move Android Apps To The SD - App 2 SD", YouTube, 10 March 2012 (2012-03-10), pages 1-1, XP054977415, Retrieved from the Internet: URL:https://www.youtube.com/watch?v=Fo6WQe Ulm-s [retrieved on 2017-06-20]

## Description

### Technical Field

The present invention relates to the field of terminals, and more particularly to an Application (APP) processing method and a terminal.

### Background

When installing an APP in a terminal, a user may select to install the APP in a built-in memory or external memory of the terminal, so that the user may conveniently select an installing position of the APP according to a requirement. However, once the APP is installed in the built-in memory of the terminal, if the user is required to move the APP to the external memory, the user may execute a movement operation on the corresponding APP only by opening a corresponding APP management interface or APP management software at first, finding a corresponding function option in the APP management interface or the APP management software and opening the function option to enter an operation interface, which brings great inconvenience to the operation of the user and causes relatively lower efficiency.

The above content is only adopted to assist in understanding the technical solutions of the present invention.

The video file "Louis Tech: Move Android Apps To The SD - App 2 SD; YouTube, 10 March 2012, retrieved from the Internet:URL:https://www.youtube.com/watch?v=Fo6WQeUlm-s" discloses the user interface of the Android application "App2SD" for moving apps from an internal memory of a mobile terminal to an SD card plugged into the mobile terminal. The main window of the user interface contains three tabs for switching between corresponding pages, namely: (i) a "Movable" page that contains only app icons of apps that are stored in the internal memory and that generally may be moved to an SD card, even if for some of the apps the moving is not recommended as they might have performance issues on the SD card (app icons of apps with potential performance issues are highlighted with a special marking); (ii) an "On SD Card" page that contains only app icons of apps that are stored on a currently mounted SD card; and (iii) a "Phone Only" page that contains only app icons of apps that are stored in the internal memory and that can never be moved to an SD card. The video shows that for moving an app from the internal memory to the SD card, the user has to switch to the "Movable" page and tap on the corresponding app icon. Responsive to long-pressing the app icon, selectable options, such as a move to SD card option, are displayed for the related app.

The document EP2437148A2 discloses a mobile terminal and control method of the mobile terminal.

### Summary of the Invention

A main purpose of the present invention is to solve the technical problem that a corresponding APP may be moved to an external memory only by virtue of an APP management interface or APP management software.

In order to achieve the abovementioned purpose, the present invention provides an APP processing method according to claim 1, and a terminal according to claim 5. Further improvements and embodiments are provided in the dependent claims.

According to the present invention, when the external memory is in the mounted state and the movement instruction triggered by the user is received, the APP icons of various preset APPs in the APP operation interface of the built-in memory are marked as being in the movable state. When the movement operation performed by the user on the APP icon in the APP operation interface of the built-in memory is detected, the APP corresponding to the APP icon is moved from the built-in memory to the external memory. According to the present invention, the user may move the APP into the external memory only by operating the APP icon in the APP operation interface of the built-in memory. Therefore, the present invention brings convenience to the operation of the user and improves the efficiency of moving the APP.

### Brief Description of Drawings

FIG. 1 is a flowchart of a first embodiment of an APP processing method according to the present invention;
FIG. 2 is a flowchart of a second embodiment of an APP processing method according to the present invention;
FIG. 3 is a flowchart of a fourth embodiment of an APP processing method according to the present invention;
FIG. 4 is a schematic diagram of an APP operation interface of an external memory;
FIG. 5 is a schematic diagram of an APP icon marked as being in a movable state;
FIG. 6 is a schematic diagram of function modules of a first embodiment of a terminal according to the present invention;
FIG. 7 is a schematic diagram of function modules of a second embodiment of a terminal according to the present invention; and
FIG. 8 is a schematic diagram of function modules of a fourth embodiment of a terminal according to the present invention.

Achievement of the purpose, functional characteristics and advantages of the present invention will be further described with reference to embodiments and the drawings.

### Specific Embodiments

It should be understood that specific embodiments described here are merely adopted to explain the present invention and not intended to limit the scope of the present invention as defined by the claims.

Those skilled in the art should understand that an implementation main body which implements an APP processing method of the present invention in the following embodiment of the APP processing method of the present invention may be a terminal such as a mobile phone, a tablet computer and a smart television, etc., and may also be any other terminal or device which may implement the APP processing method of the present invention, which will not be limited in the present invention. In the following embodiment, the implementation main body of the APP processing method of the present invention is alternatively a mobile phone.

The embodiment of the present invention provides an APP processing method.

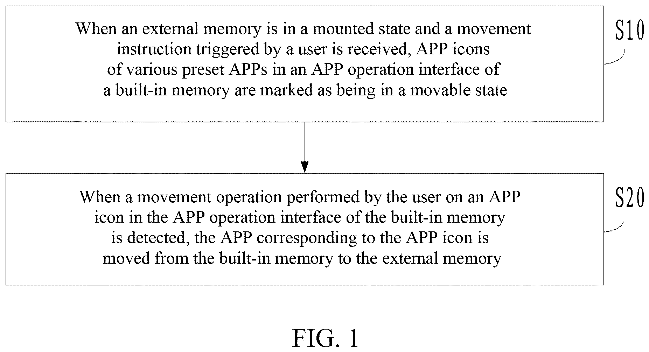

Referring to FIG. 1, FIG. 1 is a flowchart of a first embodiment of an APP processing method according to the present invention.

In the first embodiment of the APP processing method of the present invention, the method includes the following steps.

Step S10: when an external memory is in a mounted state and a movement instruction triggered by a user is received, APP icons of various preset APPs in an APP operation interface of a built-in memory are marked as being in a movable state.

Herein, the APP operation interface of the built-in memory is set as a default by an operating system in a terminal.

A method for triggering the movement instruction by the user may be preset by the mobile phone, and may be as follows: the movement instruction is triggered in a manner of a gesture, a voice, pressing a touch key, controlling an operation control, text input and the like. The manner for triggering the movement instruction is not limited in the present invention.

When receiving the movement instruction triggered by the user, the mobile phone marks the APP icons of various preset APPs in the APP operation interface of the built-in memory as being in the movable state, and the movable state refers to that the user may execute a movement operation on the APP icons.

If various APP icons in the APP operation interface of the built-in memory are not marked as being in the movable state, the user may only implement an operation of adding the APP icon to a desktop, or deleting the APP icon, or unloading the APP corresponding to the APP icon, or acquiring related information of the APP, etc. by pressing the APP icon for long.

Step S20: when a movement operation performed by the user on an APP icon in the APP operation interface of the built-in memory is detected, the APP corresponding to the APP icon is moved from the built-in memory to the external memory.

The user executes the movement operation on the APP icon in the APP operation interface of the built-in memory, herein the movement operation may be dragging the APP icon to a preset position, or clicking the APP icon, or controlling the APP icon for movement operation in a manner of a gesture, a voice, text input and the like. A manner for the movement operation is not limited in the present invention.

When detecting the movement operation of the user, the mobile phone moves the APP corresponding to the movement operation from the built-in memory to the external memory, and a manner for movement may be: moving a file and APP icon of the APP to the external memory; or, finding an installation file of the APP from the built-in memory and reinstalling the APP in the external memory. A method for moving the APP to the external memory in the present invention is similar to the existing technology, and will not be repeated herein.

In the present embodiment, the user may move the APP to the external memory only by operating the APP icon in the APP operation interface of the built-in memory. Therefore, the operation of the user is facilitated, and APP movement efficiency is improved.

In the present embodiment, a method for moving the APP from the external memory to the built-in memory may also be implemented by the following steps:
when the external memory is in the mounted state and a movement instruction triggered by the user is received, APP icons of various APPs in an APP operation interface of the external memory are marked as being in the movable state; and
when a movement operation performed by the user on an APP icon in the APP operation interface of the external memory is detected, the APP corresponding to the movement operation is moved from the external memory to the built-in memory.

In the present embodiment, the user may also move the APP to the built-in memory by operating the APP icon in the APP operation interface of the external memory.

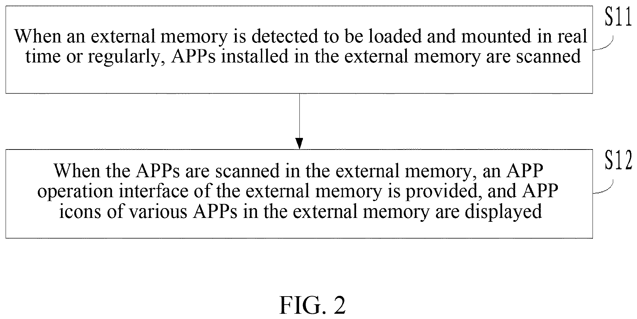

Referring to FIG. 2, FIG. 2 is a flowchart of a second embodiment of an APP processing method according to the present invention.

In the second embodiment of the APP processing method of the present invention, on the basis of the first embodiment, Step S10 in the present embodiment includes the following steps.

Step S11: when the external memory is detected to be loaded and mounted in real time or regularly, APPs in the external memory are scanned; and

Step S12: when the APPs are scanned in the external memory, an APP operation interface of the external memory is provided, and APP icons of various APPs in the external memory are displayed.

A specific method for detecting whether the external memory is loaded and mounted or not by the mobile phone is similar to the existing technology, and will not be repeated herein.

When the external memory (such as a Secure Digital (SD) Memory Card) is in the mounted state, the mobile phone scans the APPs installed in the external memory, and when the APPs are scanned in the external memory, provides the APP operation interface of the external memory, the APP operation interface of the external memory may be displayed on a Home Screen of the mobile phone, and may also be displayed on a Launcher interface or another slave interface, and the APP operation interface of the built-in memory and the APP operation interface of the external memory are switched to be displayed through the operation control.

In addition, when it is detected by the mobile phone that the external memory is not loaded and mounted, the step is continuously executed for detecting whether the external memory is loaded and mounted or not in real time or regularly.

According to the present embodiment, the mounted state of the external memory is detected in real time. When the external memory is successfully mounted, the APP icons of various APPs installed in the external memory may be rapidly displayed, so that the user may conveniently view the APPs installed in the external memory.

In a third embodiment of the APP processing method of the present invention, on the basis of the first embodiment and the second embodiment, before Step S10, the embodiment also includes that:
an edit control is provided for the user to trigger the movement instruction by virtue of the edit control.

According to the embodiment, the user triggers the movement instruction by controlling the edit control, so that the operation of the user is facilitated.

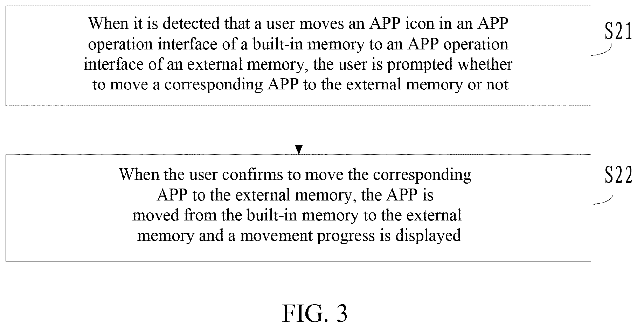

Referring to FIG. 3, FIG. 3 is a flowchart of a fourth embodiment of an APP processing method of the present invention.

In the fourth embodiment of the APP processing method of the present invention, on the basis of the first embodiment, the second embodiment and the third embodiment, Step S20 in the present embodiment includes the following steps.

Step S21: when it is detected that the user moves the APP icon in the APP operation interface of the built-in memory to the APP operation interface of the external memory, the user is prompted whether to move the corresponding APP to the external memory or not.

Step S22: when the user confirms to move the corresponding APP to the external memory, the APP is moved from the built-in memory to the external memory and a movement progress is displayed.

A manner for moving the APP icon may be a manner of long pressing and dragging manner, or direct dragging or the like. Display of the movement progress may be implemented in a manner of displaying a progress bar.

In some embodiments, the user may also control the APP icon for the movement operation by clicking the APP icon or in a manner of a gesture, a voice, text input and the like. For example, when the user clicks an APP icon twice, the mobile phone prompts the user whether to move the APP corresponding to the APP icon clicked twice to the external memory or not, and if YES, moves the APP to the external memory and a progress bar is displayed.

Of course, in some embodiments, it is unnecessary to display the movement progress, but displaying the movement progress may enable the user to conveniently learn about a current movement progress.

According to the present embodiment, the user may move the APP to the external memory by dragging the APP icon, so that the operation of the user is facilitated. When there are multiple external memories, the user may drag the APP icon to select the memory to which the APP is required to be moved.

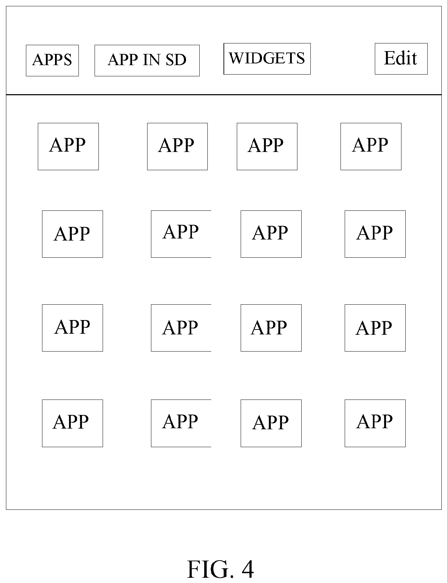

Referring to FIG. 4, FIG. 4 is a schematic diagram of an APP operation interface of an external memory.

An example may be listed below to help understanding.

In FIG. 4, "APPS", "APP IN SD" and "WIDGETS" are three operation controls, herein "APPS" controls display of the APP operation interface of the built-in memory, "APP IN SD" controls display of the APP operation interface of the external memory, "edit" is an edit control, and "APP" is an APP icon. The user triggers a movement instruction when pressing the edit control identified as "edit".

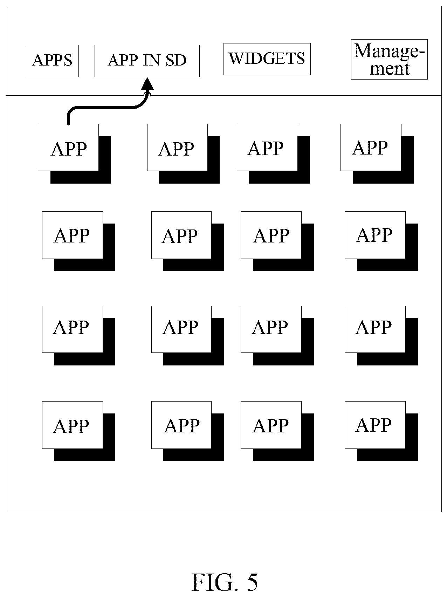

Referring to FIG. 5, FIG. 5 is a schematic diagram of an APP icon marked as being in a movable state. The APP icon identified as "APP" in FIG. 5 is marked as being in the movable state. When the user moves the APP icon to the operation control identified as "APP IN SD", "APP IN SD" controls display of the APP operation interface of the external memory.

In a fifth embodiment of the APP processing method of the present invention, on the basis of the first embodiment, the second embodiment, the third embodiment and the fourth embodiment, after the Step S12, the embodiment includes that:
When it is detected that the external memory is removed, the APP operation interface of the external memory is closed.

When the mobile phone detects that the external memory is removed, the mobile phone hides or removes the APP operation interface of the external memory.

The present invention further provides a terminal.

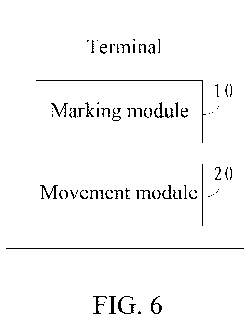

Referring to FIG. 6, FIG. 6 is a schematic diagram of function modules of a first embodiment of a terminal according to the present invention.

In the first embodiment of the terminal of the present invention, the terminal includes the following modules.

A marking module 10 is arranged to, when an external memory is in a mounted state and a movement instruction triggered by a user is received, mark APP icons of various preset APPs in an APP operation interface of a built-in memory as being in a movable state; and

A movement module 20 is arranged to, when a movement operation performed by the user on an APP icon in the APP operation interface of the built-in memory is detected, move the APP corresponding to the APP icon from the built-in memory to the external memory.

Herein, the APP operation interface of the built-in memory is set as a default by an operating system.

A method for triggering the movement instruction by the user may be preset by the marking module 10, and may be as follows: the movement instruction is triggered in a manner of a gesture, a voice, pressing a touch key, controlling an operation control, text input and the like. The manner for triggering the movement instruction is not limited in the present invention.

When receiving the movement instruction triggered by the user, the marking module 10 marks the APP icons of various preset APPs in the APP operation interface of the built-in memory as being in the movable state, and the movable state refers to that the user may execute a movement operation on the APP icons.

If various APP icons in the APP operation interface of the built-in memory are not marked as being in the movable state, the user may only implement an operation of adding the APP icon to a desktop, or deleting the APP icon, or unloading the APP corresponding to the APP icon, or acquiring related information of the APP, etc. by pressing the APP icon for long.

The user executes the movement operation on the APP icon in the APP operation interface of the built-in memory, herein the movement operation may be dragging the APP icon to a preset position, or clicking the APP icon, or controlling the APP icon for movement operation in a manner of a gesture, a voice, text input and the like. A manner for the movement operation is not limited in the present invention.

When detecting the movement operation of the user, the movement module 20 moves the APP corresponding to the movement operation from the built-in memory to the external memory, and a manner for movement may be as follows: moving a file and APP icon of the APP to the external memory; or, finding an installation file of the APP from the built-in memory and reinstalling the APP in the external memory. A method for moving the APP to the external memory in the present invention is similar to the existing technology, and will not be repeated herein.

In the present embodiment, the user may move the APP to the external memory only by operating the APP icon in the APP operation interface of the built-in memory. Therefore, the operation of the user is facilitated, and APP movement efficiency is improved.

In the present embodiment, a method for moving the APP from the external memory to the built-in memory may be implemented by the following steps.

When the external memory is in the mounted state and a movement instruction triggered by the user is received, APP icons of various APPs in an APP operation interface of the external memory are marked as being in the movable state.

When a movement operation performed by the user on an APP icon in the APP operation interface of the external memory is detected, the APP corresponding to the movement operation is moved from the external memory to the built-in memory.

In the present embodiment, the user may also move the APP to the built-in memory by operating the APP icon in the APP operation interface of the external memory.

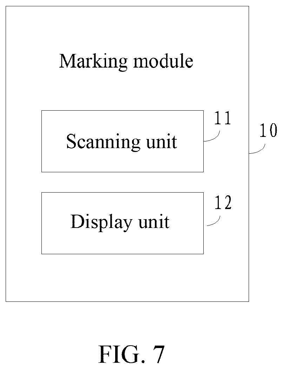

Referring to FIG. 7, FIG. 7 is a schematic diagram of function modules of a second embodiment of a terminal according to the present invention.

In the second embodiment of the terminal of the present invention, on the basis of the first embodiment, the marking module 10 in the embodiment includes the following units.

A scanning unit 11 is arranged to, when the external memory is detected to be loaded and mounted in real time or regularly, scan APPs in the external memory; and

A display unit 12 is arranged to, when the APPs are scanned in the external memory, provide an APP operation interface of the external memory, and display APP icons of various APPs in the external memory.

A specific method for detecting whether the external memory is loaded and mounted or not by the scanning unit 11 is similar to the existing technology, and will not be repeated herein.

When the external memory (such as a SD Memory Card(Security Digital Card)) is in the mounted state, the scanning unit 11 scans the APPs installed in the external memory, and when the APPs are scanned in the external memory, the display unit 12 provides the APP operation interface of the external memory, the APP operation interface of the external memory may be displayed on a Home Screen of the mobile phone, and may also be displayed on a Launcher interface or another slave interface, and the APP operation interface of the built-in memory and the APP operation interface of the external memory are switched to be displayed through the operation control.

In addition, when it is detected by the scanning unit 11 that the external memory is not loaded and mounted, the step is continuously executed for detecting whether the external memory is loaded and mounted or not in real time or regularly.

According to the present embodiment, the mounted state of the external memory is detected in real time, and when the external memory is successfully mounted, the APP icons of various APPs installed in the external memory may be rapidly displayed, so that the user may conveniently view the APPs installed in the external memory.

In a third embodiment of the terminal of the present invention, on the basis of the first embodiment and the second embodiment, the terminal in the embodiment also includes:
provision of an edit control (which is not shown in the figure) for the user to trigger the movement instruction by virtue of the edit control.

According to the present embodiment, the user triggers the movement instruction by controlling the edit control, so that the operation of the user is facilitated.

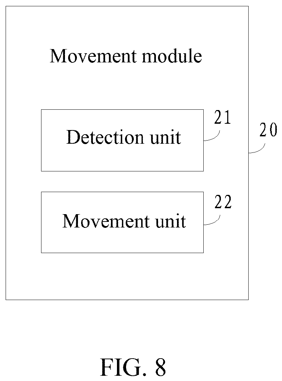

Referring to FIG. 8, FIG. 8 is a schematic diagram of function modules of a fourth embodiment of a terminal according to the present invention.

In the fourth embodiment of the APP processing method of the present invention, on the basis of the first embodiment, the second embodiment and the third embodiment, the movement module 20 in the embodiment includes the following units.

A detection unit 21 is arranged to, when it is detected that the user moves the APP icon in the APP operation interface of the built-in memory to the APP operation interface of the external memory, prompt the user whether to move the corresponding APP to the external memory or not.

A movement unit 22 is arranged to, when the user confirms to move the corresponding APP to the external memory, move the APP from the built-in memory to the external memory and display a movement progress.

A manner for moving the APP icon may be a manner of long pressing and dragging manner, or direct dragging or the like. Display of the movement progress may be implemented in a manner of displaying a progress bar.

In some embodiments, the user may also control the APP icon for the movement operation by clicking the APP icon or in a manner of a gesture, a voice, text input and the like. For example, when the user clicks an APP icon twice, the mobile phone prompts the user whether to move the APP corresponding to the APP icon clicked twice to the external memory or not, and if YES, moves the APP to the external memory and a progress bar is displayed.

Of course, in some embodiments, it may be unnecessary to display the movement progress, but displaying the movement progress may enable the user to conveniently learn about a current movement progress.

According to the present embodiment, the user may move the APP to the external memory by dragging the APP icon, so that the operation of the user is facilitated. Besides, when there is a plurality of external memories, the user may drag the APP icon to select the memory to which the APP is required to be moved.

In a fifth embodiment of the terminal of the present invention, on the basis of the first embodiment, the second embodiment, the third embodiment and the fourth embodiment, the terminal in the embodiment includes the following steps.

When it is detected that the external memory is removed, close the APP operation interface of the external memory.

When it is detected that the external memory is removed, the mobile phone may hide or remove the APP operation interface of the external memory.

The above description is not intended to limit the scope of the present invention as defined by the appended claims.

### Industrial Applicability

According to the present invention, the user may move the APP to the external memory only by operating the APP icon in the APP operation interface of the built-in memory. Therefore, the present invention brings convenience to the operation of the user and improves the efficiency of moving the APP.

## Claims

1. An application, APP, processing method for a terminal comprising a built-in memory, the APP processing method comprising following steps:
when an external memory is detected to be loaded and mounted, scanning APPs in the external memory;
when the APPs are scanned in the external memory, providing an APP operation interface of the external memory, and displaying in the APP operation interface of the external memory APP icons of various APPs in the external memory, wherein display of the APP operation interface of the external memory and display of an APP operation interface of the built-in memory are switchable through an operation control;
when the external memory is in the mounted state and a movement instruction triggered by a user is received, marking (S10) APP icons of various preset APPs in the APP operation interface of the built-in memory as being in a movable state, wherein the user may execute a movement operation only on the APP icons that are marked as being in the movable state, but not on APP icons that are not marked as being in the movable state; and
when a movement operation performed by moving one of the marked APP icons in the APP operation interface of the built-in memory to the APP operation interface of the external memory is detected, moving (S20) an APP corresponding to the APP icon on which the movement operation is performed from the built-in memory to the external memory.

2. The APP processing method according to claim 1, wherein the step of when a movement operation performed by moving one of the marked APP icons in the APP operation interface of the built-in memory to the APP operation interface of the external memory is detected, moving an APP corresponding to the APP icon on which the movement operation is performed from the built-in memory to the external memory comprises:
when it is detected that the user moves the APP icon on which the movement operation is performed in the APP operation interface of the built-in memory to the APP operation interface of the external memory, prompting the user whether to move the APP corresponding to the APP icon on which the movement operation is performed to the external memory or not; and
when the user confirms to move the APP corresponding to the APP icon on which the movement operation is performed to the external memory, moving the APP corresponding to the APP icon on which the movement operation is performed from the built-in memory to the external memory and displaying a movement progress.

3. The APP processing method according to any one of claims 1-2, before the step of marking the APP icons of various preset APPs in the APP operation interface of the built-memory as being in the movable state when the movement instruction triggered by the user is received, the APP processing method further comprising: providing an edit control for the user to trigger the movement instruction.

4. The APP processing method according to claim 1 or 2, after the step of providing the APP operation interface of the external memory and displaying in the APP operation interface of the external memory the APP icons of various APPs in the external memory, further comprising: when it is detected that the external memory is removed, closing the APP operation interface of the external memory.

5. A terminal, the terminal comprising:
a built-in memory; and
a marking module (10) comprising:
a scanning unit (11) arranged to, when an external memory is detected to be loaded and mounted, scan applications, APPs, in the external memory; and
a display unit (12) arranged to, when the APPs are scanned in the external memory, provide an APP operation interface of the external memory, and display in the APP operation interface of the external memory APP icons of various APPs in the external memory, wherein display of the APP operation interface of the external memory and display of an APP operation interface of the built-in memory are switchable through an operation control;
wherein the marking module (10) is arranged to, when the external memory is in the mounted state and a movement instruction triggered by a user is received, mark APP icons of various preset APPs in the APP operation interface of the built-in memory as being in a movable state, wherein the user may execute a movement operation only on APP icons that are marked as being in the movable state, but not on APP icons that are not marked as being in the movable state; and
the terminal further comprising a movement module (20) arranged to, when a movement operation performed by the user by moving one of the marked APP icons in the APP operation interface of the built-in memory to the APP operation interface of the external memory is detected, move an APP corresponding to the APP icon on which the movement operation is performed from the built-in memory to the external memory.

6. The terminal according to claim 5, wherein the movement module (20) comprises:
a detection unit (21) arranged to, when it is detected that the user moves the APP icon on which the movement operation is performed in the APP operation interface of the built-in memory to the APP operation interface of the external memory, prompt the user whether to move the APP corresponding to the APP icon on which the movement operation is performed to the external memory or not; and
a movement unit (22) arranged to, when the user confirms to move the APP corresponding to the APP icon on which the movement operation is performed to the external memory, move the APP corresponding to the APP icon on which the movement operation is performed from the built-in memory to the external memory and display a movement progress.

7. The terminal according to any one of claims 5-6, wherein the terminal further comprises: an edit control provision module, arranged to provide an edit control for the user to trigger the movement instruction.

8. The terminal according to claim 5 or 6, wherein the display unit (12) is further arranged to,
when it is detected that the external memory is removed, close the APP operation interface of the external memory.

## Patentansprüche

1. Ein Anwendungs, APP, -Verarbeitungsverfahren für ein Endgerät, das einen integrierten Speicher umfasst, wobei das APP-Verarbeitungsverfahren die folgenden Schritte umfasst:
wenn ein externer Speicher als geladen und angebracht erfasst ist, Scannen von APPs in den externen Speicher;
wenn die Apps in den externen Speicher gescannt sind, Bereitstellen einer App-Betriebsschnittstelle des externen Speichers, und Anzeigen von App-Symbolen von verschiedenen Apps in dem externen Speicher in der App-Betriebsschnittstelle des externen Speichers und Anzeigen von einer App-Betriebsschnittstelle, wobei die Anzeige der App-Betriebsschnittstelle des externen Speichers und die Anzeige einer App-Betriebsschnittstelle des integrierten Speichers durch eine Betriebssteuerung schaltbar sind;
wenn der externe Speicher in dem angebrachten Zustand ist und eine von einem Benutzer ausgelöste Bewegungsanweisung empfangen wird, Markieren (S10) von APP-Symbolen verschiedener voreingestellter APPs in der APP-Betriebsschnittstelle des integrierten Speichers als in einem beweglichen Zustand, wobei der Benutzer einen Bewegungsbetrieb nur auf den App-Symbolen ausführen kann, die als in dem beweglichen Zustand markiert sind, aber nicht auf App-Symbolen, die nicht als in dem beweglichen Zustand markiert sind; und
wenn ein Bewegungsbetrieb, der durch Bewegen eines der markierten App-Symbole in der App-Betriebsschnittstelle des integrierten Speichers zu der App-Betriebsschnittstelle des externen Speichers durchgeführt wird, erfasst wird, Bewegen (S20) einer APP, die dem APP-Symbol entspricht, auf dem der Bewegungsbetrieb von dem integrierten Speicher zu dem externen Speicher durchgeführt wird.

2. APP-Verarbeitungsverfahren nach Anspruch 1, wobei der Schritt, wenn ein Bewegungsbetrieb, der durch Bewegen eines der markierten App-Symbole in der App-Betriebsschnittstelle des integrierten Speichers zu der App-Betriebsschnittstelle des externen Speichers durchgeführt wird, erfasst wird, Bewegen einer APP, die dem APP-Symbol entspricht, auf dem der Bewegungsbetrieb von dem integrierten Speicher zu dem externen Speicher durchgeführt wird, umfasst:
wenn erfasst wird, dass der Benutzer das App-Symbol, auf dem der Bewegungsbetrieb in der App-Betriebsschnittstelle von dem integrierten Speicher zu dem externen Speicher durchgeführt wird, Abfragen des Benutzers, ob die App, die dem App-Symbol entspricht, auf dem der Bewegungsbetrieb durchgeführt wird, auf den externen Speicher bewegt werden soll oder nicht; und
wenn der Benutzer bestätigt, die App, die dem App-Symbol entspricht, auf dem der Bewegungsbetrieb zu dem externen Speicher durchgeführt wird, Bewegen der App, die dem App-Symbol entspricht, auf dem der Bewegungsbetrieb von dem integrierten Speicher auf den externen Speicher durchgeführt wird, und Anzeigen eines Bewegungsfortsch ritts.

3. APP-Verarbeitungsverfahren einem der Ansprüche 1-2, vor dem Schritt des Markierens der APP-Symbole verschiedener voreingestellter APPs in der APP-Betriebsschnittstelle des integrierten Speichers als in dem beweglichen Zustand befindlich, wenn die von dem Benutzer ausgelöste Bewegungsanweisung empfangen wird, wobei das APP-Verarbeitungsverfahren weiter umfasst:
Bereitstellen einer Bearbeitungssteuerung für den Benutzer, um die Bewegungsanweisung auszulösen.

4. APP-Verarbeitungsverfahren nach Anspruch 1 oder 2, nach dem Schritt des Bereitstellens der App-Betriebsschnittstelle des externen Speichers und Anzeigen der APP-Symbole von verschiedenen APPs in dem externen Speicher in der APP-Betriebsschnittstelle des externen Speichers, weiter umfassend:
Wenn erfasst wird, dass der externe Speicher entfernt ist, Schließen der APP-Betriebsschnittstelle des externen Speichers.

5. Endgerät, das Endgerät umfassend:
einen integrierten Speicher; und ein Markierungsmodul (10) umfassend:
eine Scanningeinheit (11), die eingerichtet ist, wenn ein externer Speicher als geladen und angebracht erfasst ist, um Anwendungen, APPs in den externen Speicher zu scannen; und
eine Anzeigeeinheit (12), die eingerichtet ist, wenn die APPs in den externen Speicher gescannt sind, um eine APP-Betriebsschnittstelle des externen Speichers bereitzustellen, und APP-Symbolen von verschiedenen APPs in dem externen Speicher in der APP-Betriebsschnittstelle des externen Speichers anzuzeigen, wobei die Anzeige der APP-Betriebsschnittstelle des externen Speichers und die Anzeige einer APP-Betriebsschnittstelle des integrierten Speichers durch eine Betriebssteuerung schaltbar sind;
wobei das Markierungsmodul (10) eingerichtet ist, wenn der externe Speicher in dem angebrachten Zustand ist und eine von einem Benutzer ausgelöste Bewegungsanweisung empfangen ist, um APP-Symbolen von verschiedenene voreingestellten APPs in der APP-Betriebsschnittstelle des integrierten Speichers als in einem beweglichen Zustand zu markieren, wobei der Benutzer einen Bewegungsbetrieb nur auf den App-Symbolen ausführen kann, die als in dem beweglichen Zustand markiert sind, aber nicht auf App-Symbolen, die nicht als in dem beweglichen Zustand markiert sind; und
das Endgerät weiter ein Bewegungsmodul (20) umfassend, das eingerichtet ist, wenn ein Bewegungsbetrieb, der durch Bewegen eines der markierten App-Symbole in der App-Betriebsschnittstelle des integrierten Speichers zu der App-Betriebsschnittstelle des externen Speichers durchgeführt wird, erfasst wird, um eine APP, die dem APP-Symbol entspricht, auf dem der Bewegungsbetrieb von dem integrierten Speicher zu dem externen Speicher durchgeführt wird, zu bewegen.

6. Endgerät nach Anspruch 5, wobei das Bewegungsmodul (20) umfasst:
eine Erfassungseinheit (21), die eingerichtet ist, um, wenn erfasst wird, dass der Benutzer das App-Symbol, auf dem der Bewegungsbetrieb in der App-Betriebsschnittstelle von dem integrierten Speicher zu dem externen Speicher durchgeführt wird, den Benutzer abzufragen, ob die App, die dem App-Symbol entspricht, auf dem der Bewegungsbetrieb durchgeführt wird, auf den externen Speicher bewegt werden soll oder nicht; und
eine Bewegungseinheit (22), die eingerichtet ist, um, wenn der Benutzer bestätigt, die App, die dem App-Symbol entspricht, auf dem der Bewegungsbetrieb zu dem externen Speicher durchgeführt wird, die App, die dem App-Symbol entspricht, auf dem der Bewegungsbetrieb von dem integrierten Speicher auf den externen Speicher durchgeführt wird, zu bewegen und einen Bewegungsfortschritt anzuzeigen.

7. Endgerät nach einem der Ansprüche 5 - 6, wobei das Endgerät weiter umfasst:
ein Bearbeitungssteuerungs-Bereitstellungsmodul, das eingerichtet ist, um eine Bearbeitungssteuerung für den Benutzer bereitzustellen, um die Bewegungsanweisung auszulösen.

8. Endgerät nach Anspruch 5 oder 6, wobei die Anzeigeeinheit (12) ferner dazu eingerichtet ist, die APP-Betriebsschnittstelle des externen Speichers zu schließen, wenn erfasst wird, dass der externe Speicher entfernt worden ist.

## Revendications

1. Une application, APP, procédé de traitement pour un terminal comprenant une mémoire, le procédé de traitement APP comprenant les étapes suivantes:
lorsqu'une mémoire externe est détectée pour être chargée et montée, il se produit un scan des applications dans la mémoire externe;
lorsque les APP sont scannées dans la mémoire externe, fournissant une interface de fonctionnement APP de la mémoire externe et affichant dans l'interface de fonctionnement APP de la mémoire externe des icônes APP de différentes APPs dans la mémoire externe, là où
l'affichage de l'interface de fonctionnement APP du mémoire externe et l'affichage d'une interface de fonctionnement APP de la mémoire intégrée est commutable à travers un contrôle d'opération;
lorsque la mémoire externe est dans l'état monté et qu'une instruction de mouvement déclenchée par un utilisateur est reçue, il se produit marquage (S10)
les icônes d'APP de diverses APPs prédéfinies dans l'interface de fonctionnement APP de la mémoire intégrée comme étant à l'état mobile, l'utilisateur pouvant exécuter une opération de déplacement uniquement sur les icônes APP marquées comme étant à l'état mobile, mais pas sur
les icônes APP qui ne sont pas marqués comme étant à l'état mobile; et
lorsqu'une opération de mouvement effectuée en déplaçant l'une des icônes APP marquées dans l'interface de fonctionnement APP de la mémoire intégrée vers l'interface de fonctionnement APP de la mémoire externe est détectée, il se produit un déplacement (S20)
une APP correspondant à l'icône APP sur laquelle l'opération de déplacement est effectuée de la mémoire intégrée vers la mémoire externe.

2. Procédé de traitement APP selon la revendication 1, dans lequel l'étape consistant à effectuer une opération de déplacement en déplaçant l'une des icônes APP marquées dans l'interface de fonctionnement APP de la mémoire intégrée à l'interface de fonctionnement APP de la mémoire externe est détectée, un déplacement d'une APP correspondant à l'icône APP sur laquelle l'opération de déplacement est effectuée de la mémoire intégrée vers la mémoire externe comprend:
quand il est détecté que l'utilisateur déplace l'icône APP sur laquelle l'opération de mouvement est effectuée dans l'interface de fonctionnement APP de la mémoire intégrée vers l'interface d'opération APP de la mémoire externe, invitant l'utilisateur à déplacer l'APP correspondant à l'icône APP
sur laquelle l'opération de déplacement est effectuée vers la mémoire externe ou non; et lorsque l'utilisateur confirme le déplacement de l'application correspondant à l'icône APP sur laquelle l'opération de déplacement est effectuée à la mémoire externe, en déplaçant l'APP
correspondant à l'icône APP sur laquelle l'opération de déplacement est effectuée de la mémoire intégrée vers la mémoire externe et affichant une progression du mouvement.

3. Procédé de traitement APP selon l'une quelconque des revendications 1 et 2, avant l'étape de marquage des icônes APP de divers APP prédéfinis dans l'interface de fonctionnement APP de la mémoire intégrée qui est dans l'état mobile lorsque l'instruction de mouvement déclenchée par l'utilisateur est reçue, le procédé de traitement APP comprenant en outre:
fournir un contrôle d'édition à l'utilisateur pour déclencher l'instruction de mouvement.

4. Procédé de traitement APP selon la revendication 1 ou 2, après l'étape consistant à fournir l'interface de fonctionnement APP de la mémoire externe et à afficher dans l'interface de fonctionnement APP de la mémoire externe les icônes APP de diverses APPs dans la mémoire externe, comprenant en outre:
lorsqu'il est détecté que la mémoire externe est supprimée, il se passe une fermeture de l'interface de fonctionnement APP de la mémoire externe.

5. Un terminal, le terminal comprenant:
une mémoire intégrée; et un module de marquage (10) comprenant:
une unité de scanner (11) agencée pour, lorsqu'une mémoire externe est détectée afin
d'être chargée et montée, les applications sont scannées, APPs, dans la mémoire externe; et
une unité d'affichage (12) est agencée afin de, lorsque les applications sont scannées dans la mémoire externe, fournir une interface de fonctionnement APP de la mémoire externe, et affichage dans l'interface de fonctionnement APP des icônes APP de la mémoire externe de différentes APPs dans la
mémoire externe, là où il se produit l'affichage de l'APP une interface de fonctionnement APP de mémoire externe et l'affichage
d'une interface de fonctionnement APP de la mémoire intégrée sont commutables par l'intermédiaire d'un contrôle de fonctionnement;
dans lequel le module de marquage (10) est agencé afin de, lorsque la mémoire externe est dans l'état monté et qu'une instruction de mouvement déclenchée par un utilisateur est reçue, marquer les icônes APP de diverses APPs prédéfinies dans l'interface de fonctionnement APP de la mémoire intégrée comme étant à l'état mobile, là où l'utilisateur ne pouvant exécuter une opération de déplacement que sur les icônes APP marquées comme étant à l'état mobile, mais pas sur les icônes APP qui ne sont pas marquées comme étant à l'état mobile; et
le terminal comprenant en outre un module de mouvement (20)
agencé pour, quand une opération de mouvement effectuée par l'utilisateur en déplaçant l'une des icônes APP marquées dans l'interface de fonctionnement APP de la mémoire intégrée vers l'interface de fonctionnement APP de la mémoire externe est détectée, déplacez une APP correspondant à l'icône APP sur laquelle l'opération de déplacement est effectuée de la mémoire intégrée vers la mémoire externe.

6. Le terminal selon la revendication 5, dans lequel le module de mouvement (20) comprend:
une unité de détection (21)
agencé afin de, quand il est détecté que l'utilisateur déplace l'icône APP sur laquelle l'opération de déplacement est effectuée dans l'interface de fonctionnement APP de la mémoire intégrée vers l'interface de fonctionnement APP de la mémoire externe, demander à l'utilisateur s'il faut déplacer le
APP correspondant à l'icône APP sur laquelle l'opération de déplacement est effectuée à la mémoire externe ou non; et
une unité de déplacement (22) agencée afin de, lorsque l'utilisateur confirme le déplacement de l'APP correspondant à l'icône APP sur laquelle l'opération de déplacement est effectuée vers la mémoire externe, déplacer l'APP correspondant à l'icône APP sur laquelle l'opération de déplacement est effectuée de la mémoire intégrée à la mémoire externe et affiche une progression du mouvement.

7. Le terminal selon l'une quelconque des revendications 5 à 6, dans lequel le terminal comprend en outre:
un module de fourniture de contrôle d'édition, agencé pour fournir un contrôle d'édition à l'utilisateur pour déclencher l'instruction de mouvement.

8. Le terminal selon les revendications 5 à 6, dans lequel l'unité d'affichage (12) est en outre agencé afin de,
quand il est détecté que la mémoire externe est supprimée, fermer l'interface de fonctionnement APP de la mémoire externe.
